# EUROPEAN PATENT APPLICATION

(11) **EP 4 761 252 A1**
(43) Date of publication of application: **17.06.2026**
(21) Application number: 24851009.1
(22) Date of filing: 06.08.2024
(51) Int. Cl.: H04N 21/44, H04N 21/458, H04N 21/431

(54) **METHOD AND APPARATUS FOR GENERATING MEDIA CONTENT, AND ELECTRONIC DEVICE AND STORAGE MEDIUM**

(30) Priority: 07.08.2023 CN 202310988670
(71) Applicant: Beijing Zitiao Network Technology Co., Ltd., Beijing 100190 (CN)
(72) Inventor: ZHANG, Nuomeng, Beijing 100028 (CN); YOU, Zhehao, Beijing 100028 (CN); BAI, Xiaoshuang, Beijing 100028 (CN)
(74) Representative: Grünecker Patent- und Rechtsanwälte PartG mbB
(86) International application number: PCT/CN2024/110135
(87) International publication number: WO 2025/031364

(57) **Abstract**

The embodiment of the disclosure provides a method, an apparatus, an electronic device and a storage medium for generating media content. The method includes: displaying an editing item of a first effect, the first effect being an effect already posted in a current application, and the editing item being configured to edit the first effect; creating and generating, in response to an effect generation operation, a second effect based on an editing operation on the first effect; generating first media content within the current application based on the second effect.

## Description

**This** application claims priority to Chinese Patent Application No. 202310988670.8, filed August 07, 2023, and entitled "METHOD, APPARATUS, ELECTROCNIC DEVICE AND STORAGE MEDIUM FOR GENERATING MEDIA CONTENT", the entire contents of which are incorporated herein by reference.

### FIELD

Embodiments of the present disclosure relate to the field of computer technologies, and in particular, to methods, apparatuses, electronic devices and storage media for generating media content.

### BACKGROUND

In some platforms, users may be supported to generate media content based on effects that have been posted in the platform. However, the manner of generating the media content is relatively single.

### SUMMARY

The embodiment of the disclosure provides a method, an apparatus, an electronic device and a storage medium for generating media content, to enrich the ways for generating media content.

According to a first aspect, an embodiment of the present disclosure provides a method for generating media content, comprising: displaying an editing item of a first effect, the first effect being an effect already posted in a current application, and the editing item being configured to edit the first effect; creating and generating, in response to an effect generation operation, a second effect based on an editing operation on the first effect; generating first media content within the current application based on the second effect.

According to a second aspect, an embodiment of the present disclosure further provides an apparatus for generating media content, comprising: an editing item display module configured to display an editing item of a first effect, the first effect being an effect already posted in a current application, and the editing item being configured to edit the first effect; an effect generation module configured to create and generate, in response to an effect generation operation, a second effect based on an editing operation on the first effect; a media content generation module configured to generate target media content within the current application based on the second effect.

According to a third aspect, an embodiment of the present disclosure further provides an electronic device, comprising: one or more processors; and a memory storing one or more programs that, when executed by the one or more processors, cause the one or more processors to implement the method for generating media content according to the embodiments of the present disclosure.

According to a fourth aspect, an embodiment of the present disclosure further provides a computer-readable storage medium having thereon a computer program which, when executed by a processor, implements the method for generating media content according to the embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and components and elements are not necessarily drawn to scale.
FIG. 1 is a schematic flowchart of the method for generating media content according to an embodiment of the present disclosure;
FIG. 2 is a schematic diagram of displaying an editing item according to an embodiment of the disclosure;
FIG. 3 is a schematic diagram of displaying an effect keyword input area according to an embodiment of the disclosure;
FIG. 4 is a schematic flowchart of another method for generating media content according to an embodiment of the present disclosure;
FIG. 5 is a schematic diagram of displaying a preset effect presentation interface according to an embodiment of the disclosure;
FIG. 6 is a schematic diagram of displaying a media content editing interface according to an embodiment of the disclosure;
FIG. 7 is a structural block diagram of an apparatus for generating media content according to an embodiment of the disclosure; and
FIG. 8 is a schematic structural diagram of an electronic device according to an embodiment of the present disclosure.

### DETAILED DESCRIPTION

The embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein. On the contrary, those embodiments are provided for the thorough and complete understanding of the present disclosure. It should be understood that the drawings and embodiments of the present disclosure are only used for illustration, rather than limiting the protection scope of the present disclosure.

It should be understood that various steps described in the method implementations of the present disclosure may be performed in different orders, and/or in parallel. Further, the method implementations may include additional steps and/or omit the illustrated steps. The scope of the present disclosure is not limited in this regard.

As used herein, the term "comprise" and variants thereof are to be read as open terms that mean "include, but is not limited to". The term "based on" is to be read as "based at least in part on". The term "one embodiment" means "at least one embodiment", the term "another embodiment" means "at least one another embodiment", the term "some embodiments" means "at least some embodiments". The relevant definitions of other terms will be given below.

It should be noted that the concepts of "first", "second" and the like mentioned in this disclosure are merely used to distinguish between different apparatuses, modules, or units, rather than limiting the order or interdependence of functions performed by the apparatuses, modules, or units.

It should be noted that the modification of "one" and "more" mentioned in this disclosure are examples but not limiting, and should be understood as "one or more" to those skilled in the art, unless otherwise specified.

The names of messages or information exchanged between a plurality of apparatuses in implementations of the present disclosure are used for illustrative purposes only and are not intended to limit the scope of such messages or information.

It can be understood that, before the technical solutions disclosed in the embodiments of the present disclosure are used, the types, the usage scope, the usage scenario and the like of personal information related to the present disclosure should be notified to the user in an appropriate manner according to the relevant laws and regulations and the authorization of the user should be obtained.

For example, in response to receiving an active request from a user, a prompt information is sent to the user to explicitly prompt the user that the operation requested by the user will need to obtain and use the user's personal information. Thus, users may autonomously select whether to provide personal information to the software or the hardware such as an electronic device, an application, a server or a storage medium that perform the operation of the technical solution of the present disclosure according to the prompt information.

As an optional but non-restrictive implementation, in response to receiving an active request from a user, the way of sending prompt information to the user may be, for example, a pop-up window in which prompt information may be presented in text. In addition, pop-up windows may also contain selection controls for users to choose "agree" or "disagree" to provide personal information to electronic devices.

It will be appreciated that the above process of notification and acquisition of user authorization are only schematic and do not limit the implementations of the present disclosure. Other methods that meet relevant laws and regulations may also be applied to the implementation of the present disclosure.

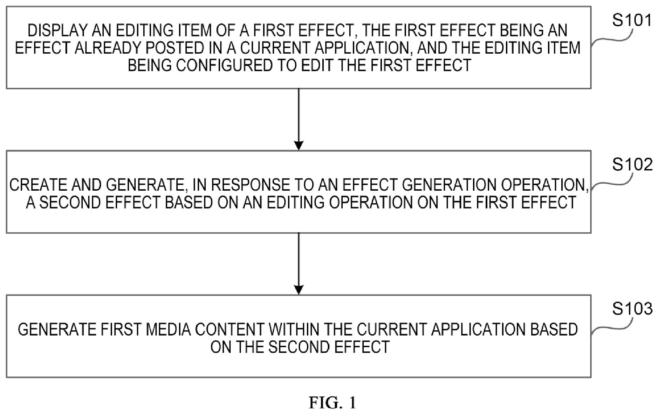

FIG. 1 is a schematic flowchart of a method for generating media content according to an embodiment of the present disclosure. The method may be performed by an apparatus for generating media content. The apparatus may be implemented by software and/or hardware, and may be configured in an electronic device. Typically, the apparatus may be configured in a cell phone or a tablet computer. The method for generating media content provided by the embodiment of the disclosure is suitable for a scene in which the posted effect is edited, and the media content is generated by adopting the edited effect. As shown in FIG. 1, the method for generating media content provided in this embodiment may comprise the following steps.

S101: displaying an editing item of a first effect, the first effect being an effect already posted in a current application, and the editing item being configured to edit the first effect.

The first effect may be an effect based on which the current user wants to create and generate an effect. The first effect is an effect already posted in the current application, such as an effect posted in the current application by the current user or another user other than the current user. The type of the first effect is not limited, for example, the first effect may be an artificial intelligence (AI) effect, a beauty effect or a makeup effect, and the like, and the following takes an AI effect as an example for description. The AI effect may be used to perform image processing on a person image to obtain a stylized image.

For example, while the media content generated by using the first effect is presented in the media content capturing interface or the media content editing interface, the editing entry of the first effect is presented to trigger the editing item for displaying the first effect. There are many ways to trigger the display of the media content capturing interface or the media content editing page that uses the first effect. For example, when the second media content generated by using the first effect is presented in the media content presentation interface, the media content capturing entry is displayed in the media content presentation interface; or the effect information of the at least one effect and the corresponding media content capturing entry are presented in the preset effect presentation interface, and the at least one effect includes the first effect; or the detailed information of the first effect and the media content capturing entry are presented in the detail interface of the first effect, and after the media content capturing entry is triggered (that is, the entry for capturing the same work of the first effect) is triggered, the media content capturing interface is entered and the first effect corresponding to the media content capturing entry is used by default. That is, after the first effect is posted, other users may use the same effect for creation.

The editing item of the first effect may be content for editing the first effect, for example, content such as option, control and/or area (for example, an input area) for editing the first effect. Optionally, the editing item comprises a first editing item and/or a second editing item. The first editing item includes a candidate effect selection item and/or an effect intensity editing item, wherein the effect intensity editing item is used to edit an effect intensity of the first effect. The second editing item includes a style editing item and/or a keyword editing item, wherein the style editing item is used to edit the effect style information of the first effect, and the keyword editing item is used to edit the effect keyword information of the first effect.

It may be understood that, after the user starts to create the media content from the media content presentation interface, the preset effect presentation interface, or the detailed information of the first effect by capturing the same work as the first effect, the image is processed by default using the effect model corresponding to the first effect. After the user triggers the determining of the effect style information in the capturing interface or the media content editing interface, the corresponding effect model may be modified. When the user determines the effect keyword information, the effect model may be adjusted based on the effect keyword information. After the user completes the effect creation of the effect, the effect model corresponding to the newly modified effect is determined. That is, when other users use the first effect to capture the same work, the effect model of the existing first effect is modified and adjusted.

The first editing item may be an editing item for editing a processing effect of the first effect. The first editing item includes a candidate effect selection item and/or an effect intensity editing item. The candidate effect selection item may be understood as a selection item for selecting a processing effect of the first effect, and different candidate effect selection items correspond to different candidate effects of the first effect. The candidate effect may be understood as a processing effect to be selected of the first effect. For example, different candidate effects may correspond to different image processing intensities, different color intensities, or different stylized intensities. The effect intensity editing item may be an editing item for adjusting an effect intensity of the first effect, for example, an editing item for adjusting an effect intensity when the image of the first effect is processed. The effect intensity editing item may be displayed in a form of a control or another form.

The second editing item may be an editing item for editing the effect style information and/or the effect keyword information of the first effect. The second editing item includes a style editing item and/or a keyword editing item. The style editing item may be used to edit the effect style information of the first effect. The effect style information may be understood as style information of effects, such as cartoon style, vintage style, and the like. The keyword editing item may be used to edit the effect keyword information of the first effect. The effect keyword information may be understood as keyword information describing an effect, for example, keyword information describing an attribute of an effect or an attribute of a certain part of an effect.

Specifically, an editing item of the first effect may be displayed, for example, based on a corresponding triggering operation of the current user. The first editing item and/or the second editing item of the first effect are displayed in an interface such as an effect editing interface of the first effect and/or a media content editing interface of the first media content, so that the current user may edit the first effect.

In this embodiment, when the editing item of the first effect is displayed, the editing item corresponding to the current effect style information, the effect keyword information and/or the candidate effect of the first effect may be displayed as in the selected state, so that the current user explicitly edits the related information of the first effect.

Optionally, the editing item comprises a second editing item, and displaying the editing item of the first effect comprises at least one of: displaying an effect style editing item, the effect style editing item comprising at least one effect style information, the at least one effect style information comprising first effect style information of the first effect, and the first effect style information being displayed as in a selected state; displaying an effect keyword editing item, the effect keyword editing item comprising at least one effect keyword information, the at least one effect keyword information comprising first effect keyword information of the first effect, and the first effect keyword information being displayed as in a selected state.

The effect style editing item comprises at least one effect style information to be selected, and the at least one effect style information to be selected comprises the current effect style information of the first effect. The first effect style information may be considered as the current effect style information of the first effect. For example, the first effect style information may be original effect style information of the first effect before editing, for example, the effect style information when the first effect is posted. The effect keyword editing item comprises at least one effect keyword information to be selected, and the at least one effect keyword information to be selected comprises the current effect keyword information of the first effect. The first effect keyword information may be considered as the current effect keyword information of the first effect. For example, the first effect keyword information may be original effect keyword information of the first effect before editing, for example, the effect keyword information when the first effect is posted.

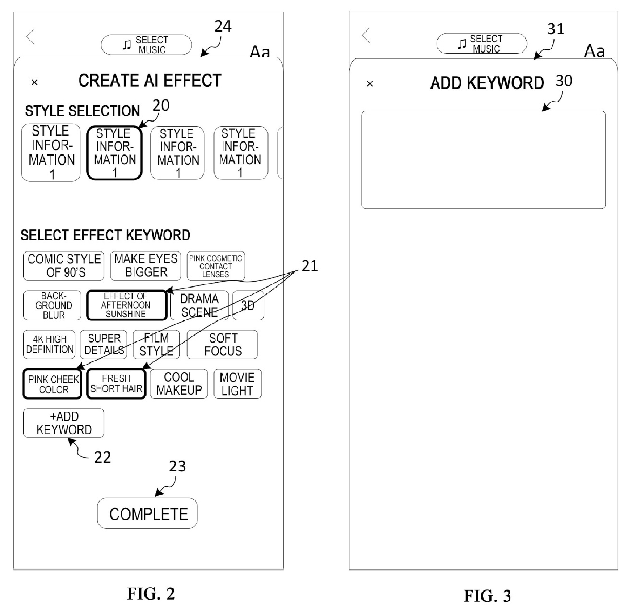

For example, as shown in FIG. 2 (an example in which the effect editing interface is used to create and generate an AI effect), when the effect style editing item of the first effect is displayed, at least one effect style information including the first effect style information 20 of the first effect may be displayed, and the first effect style information 20 of the first effect is displayed as in the selected state. Alternatively or in addition, when the effect keyword editing item of the first effect is displayed, at least one effect keyword information including the first effect keyword information 21 of the first effect may be displayed, and the first effect keyword information 21 of the first effect may be displayed as in the selected state.

In this embodiment, after displaying the editing item of the first effect, the current user may perform an editing operation on the first effect based on the displayed editing item to edit the first effect. In this case, optionally, after displaying the editing item of the first effect, the method further comprises: editing the first effect in response to an editing operation on the first effect, the editing operation applied on the editing item.

In some implementations, editing the first effect in response to the editing operation on the first effect comprises at least one of: switching, in response to a selection operation on second effect style information in the at least one effect style information, the second effect style information from an unselected state to a selected state, and the first effect style information from a selected state to an unselected state; switching, in response to a selection operation on second effect keyword information in the at least one effect keyword information, the second effect keyword from an unselected state to a selected state; switching, in response to a deselection operation on the first effect keyword, a first effect keyword corresponding to the deselection operation from a selected state to an unselected state; updating, in response to a modification operation on third effect keyword information in the at least one effect keyword information, the third effect keyword information, and displaying the third effect keyword information as in a selected state; cancelling, in response to a deletion operation on fourth effect keyword information in the at least one effect keyword information, a display of the fourth effect keyword information.

The selection operation on the second effect style information may be a triggering operation for selecting a certain effect style information, such as an operation for clicking an effect style information in an unselected state. The second effect style information may be effect style information corresponding to the selection operation, for example, the effect style information clicked by the current user. The second effect style information and the first effect style information may be different effect style information.

The selection operation on the second effect keyword information may be a triggering operation for selecting certain effect keyword information, such as an operation for clicking an effect keyword information in an unselected state. The second effect keyword information may be effect keyword information corresponding to the selection operation, for example, the effect keyword information clicked by the current user. The deselection operation on the first effect keyword may be an operation for canceling the selection of the effect keyword information in the selected state, for example, the operation for clicking certain effect keyword information in the selected state. The modification operation may be an operation for indicating to modify an effect key information. The third effect keyword information may be the effect keyword information indicated to be modified by the modification operation. The deletion operation may be an operation for indicating deletion of the displayed effect keyword information, for example, an operation for triggering a deletion control corresponding to a certain effect keyword information, and the like. The fourth effect keyword information may be the effect keyword information indicated to be deleted by the deletion operation. The second effect keyword information, the third effect keyword information, and/or the fourth effect keyword information may be the same as or different from the first effect keyword information.

In the above embodiments, the user may be supported to select the effect style information, select or deselect the effect keyword information, and/or modify and/or delete the effect keyword information, to meet different editing requirements of the user.

For example, when the selection operation on the displayed second effect style information is received, the effect style information currently in the selected state may be switched from the first effect style information to the second effect style information. For example, the first effect style information is switched from the selected state to the unselected state, and the second effect style information is switched from the unselected state to the selected state.

When the selection operation on the displayed second effect keyword information is received, the second effect keyword information may be switched from the unselected state to the selected state. In this case, the first effect keyword information may maintain in the selected state (for the case that the current application supports the user to select the plurality of effect keyword information), or be switched from the selected state to the unselected state (for the case that the current application only supports the user to select one effect keyword information).

When the deselection operation for the first effect keyword information currently in the selected state is received, the first effect keyword information may be switched from the selected state to the unselected state.

When the modification operation for the third effect keyword information is received, the third effect keyword information may be updated based on the modification operation, and the third effect keyword information may be further displayed in the unselected state. For example, when the third effect keyword information is in the unselected state, it is switched from the unselected state to the selected state. It may be understood that, when the third effect keyword information is in the unselected state, after the third effect keyword information is updated, the third effect keyword information may be continuously maintained in an unselected state, which may be specifically set as needed.

When a deletion operation for the fourth effect keyword information is received, the display of the fourth effect keyword information may be canceled.

In some implementations, the editing item comprises a second editing item, the second editing item comprises a keyword editing item, and editing the first effect in response to the editing operation on the first effect comprises:
displaying, in response to an effect keyword information addition operation, an effect keyword input area for a current user to input fifth effect keyword information; additionally presenting, in response to an input completion operation, the fifth effect keyword information inputted by the current user; or
obtaining, in response to the effect keyword input operation, the fifth effect keyword information, and additionally presenting the fifth effect keyword information.

The effect keyword input area may be an area for a user to enter effect keyword information through keyboard, and the keyboard may be a virtual keyboard or a non-virtual keyboard. The effect keyword information addition operation may be an operation for indicating to display an effect keyword area, for example, an operation for triggering a keyword addition control displayed in the effect editing interface. The input completion operation may be an operation for indicating that the keyword input is completed, for example, an operation for triggering an input completion control or a button on a keyboard.

In the foregoing implementations, the user may be supported to add effect keyword information.

In an optional implementation, the effect keyword input area may be displayed in response to the triggering operation of the user. That is, when the user needs to input the effect keyword information through keyboard, the effect keyword input area is displayed. Thus, the content presented in the effect editing interface is simplified.

Specifically, when receiving the effect keyword information addition operation, the current application may display the effect keyword input area 30. For example, when it is detected that the current user triggers the keyword adding control 22 (as shown in FIG. 2), it may be determined that the effect keyword information addition operation is received, and in response to the effect keyword addition operation, the effect keyword input area 30 is displayed in the current interface or keyword adding interface 31 (as shown in FIG. 3).

Therefore, the current user may input effect description content in the effect keyword input area 30. For example, the current user may input one or more effect keyword information, or input one or more effect description statements. When the input is completed, an input completion operation is performed.

Correspondingly, when detecting that the current user performs the input completion operation, the current application may additionally present the effect keyword information corresponding to the effect description content inputted by the current user in the description area of the effect editing interface.

In an optional implementation, when the effect editing interface displays the editing item of the first effect, the effect keyword input area is further displayed, so that the user can directly input the effect keyword information in the effect keyword input area, thereby simplifying the operation required by the user to input the effect keyword information.

Specifically, when the input operation of the current user in the effect keyword input area of the effect editing interface is received, the character input by the current user may be presented in the effect keyword input area. When the current user completes the input, the effect description information inputted by the current user in the effect keyword input area is obtained, and the effect keyword information corresponding to the effect description content inputted by the current user is additionally presented in the description area.

In the above implementation, the user may select the effect keyword information he/she wants to select through the selection operation, and/or deselect the effect keyword information he/she does not want to select through the deselection operation. Therefore, the effect keyword information in the selected state may be used as the effect keyword information of the second effect to be created by the user. In this case, when the obtained effect keyword information is additionally presented in the description area, the obtained effect keyword information may be presented as in a selected state or an unselected state, which may be specifically set as needed.

Considering that the effect description content inputted by the user in the effect keyword input area is usually the effect description content that the user wants to select, thus optionally, when the obtained effect keyword information is additionally presented in the description area, the obtained effect keyword information may be presented as in the selected state. In this way, the operation required by the user in the effect creation process may be further simplified. In this case, additionally presenting the fifth effect keyword information may comprise: additionally presenting the fifth effect keyword information in a selected state.

In some implementations, the user may not be required to input only one keyword each time and/or input in a form of keyword. For example, the user may be supported to input multiple keywords in the effect keyword input area, and/or the user may be supported to input one or more effect description statements in the effect keyword input area. Therefore, when the user completes the input, the effect description content inputted by the user may be obtained. The tokenization is performed on the effect description content, and the at least one keyword information obtained by the tokenization is used as the effect keyword information. In this case, optionally, before additionally presenting the fifth effect keyword information, the method further comprises: obtaining effect description content inputted by the current user; performing tokenization on the effect description content to obtain at least one keyword information as the fifth effect keyword information.

In the foregoing implementation, the manner of performing tokenization on the effect description content is not limited. Optionally, performing tokenization on the effect description content comprises: performing tokenization on the effect description content based on semantic analysis; and/or performing tokenization on the effect description content based on a preset separator. That is, tokenization may be performed on the effect description content based on the semantic analysis and/or the preset separator, for example, tokenization may be performed on the effect description content based on semantics of the natural language analysis, and/or tokenization may be performed on the effect description content based on preset separators such as spaces, commas, and/or slight-pause marks.

S102: creating and generating, in response to an effect generation operation, a second effect based on an editing operation on the first effect.

The effect generation operation may be a triggering operation for instructing to create and generate a new effect based on an editing operation on the first effect, for example, the operation for triggering a completion control displayed in the effect editing interface or another gesture operation. In response to the effect generation operation, the newly created effect model is determined. The second effect may be considered as an effect created and generated in response to the effect generation operation.

In this embodiment, when the effect generation operation is received, for example, when it is detected that the current user triggers the completion control 23 in the effect editing interface (as shown in FIG. 2), the second effect may be created and generated based on the editing operation by the current user on the first effect, for example, the second effect is created and generated based on the editing item that is in the selected state when the effect generation operation is received.

S103: generating first media content within the current application based on the second effect.

The first media content is media content obtained from processing that uses the second effect.

In this embodiment, after the second effect is created, the current user may create media content by using the second effect, for example, generate the first media content based on the second effect in the current application.

In some implementations, after creating and generating the second effect, the current user may post the second effect. For example, the user may post the second effect separately, or post the second effect with the created media content. In this case, optionally, after creating and generating the second effect based on the editing operation on the first effect, the method further comprises at least one of: posting the second effect in the current application in response to a first posting operation for the second effect; posting the first media content and the second effect in the current application in response to a second posting operation for the first media content.

The first posting operation may be a triggering operation for instructing to post the second effect and not for instructing to post the media content. The second posting operation may be a triggering operation for instructing to post the second effect and the media content. The first posting operation and the second posting operation may be different triggering operations. The specific execution manners of the first posting operation and the second posting operation are not limited. The first media content may be the media content obtained and posted using the second effect for the first time after the second effect is created by the current user.

For example, when the first posting operation for the second effect is received, the second effect may be posted in the current application; and/or when the second posting operation for the first media content obtained by using the second effect is received, if the first media content is the media content that is posted by the current user for the first time and is generated based on the second effect, the target media content and the second effect may be posted in the current application, to enrich the posting manner of the effect and meet different posting requirements of the user.

In some implementations, a preset effect display interface or a detail interface of the first effect may be displayed, and an editing item of the first effect is displayed in the effect editing interface 24 of the first effect in response to a second editing item display operation applied on the preset effect display interface or the detail interface, as shown in FIG. 2. In this case, optionally, displaying the editing item of the first effect comprises: displaying the editing item of the first effect in an effect editing interface of the first effect in response to a second editing item display operation, the second editing item display operation applied on a preset effect presentation interface or a detail interface of the first effect, and the preset effect presentation interface being configured to present effect information of at least one effect.

The second editing item display operation may be an editing item display operation applied on a preset effect presentation interface or a detail interface of the first effect. The editing item display operation may be understood as an operation for instructing to display an editing item of the first effect. The preset effect presentation interface may be configured to present effect information of at least one effect. Optionally, the effect information comprises at least one of poster information, an effect name, effect keyword information, and effect usage information. The poster information of an effect may be considered as related information of a poster of the effect, for example, a nickname and/or an avatar of the poster. The effect usage information of an effect may be considered as information for describing a usage status of the effect, for example, the number of times the effect is used or the number of people who use it. The at least one effect may comprise an effect provided by the platform and/or an effect posted by a user in the platform. The first effect is included in the at least one effect. The detail interface of the first effect may be used to present detailed information of the first effect.

In the foregoing implementation, after the second effect is created and generated, the media resources to be processed may be obtained, and the media content editing interface of the obtained media resources is displayed. In such way, the user may edit the media resources and generate the first media content. In this case, optionally, after creating and generating the second effect based on the editing operation on the first effect, the method further comprises: obtaining media resources to be processed; displaying a media content editing interface of the media resources, and presenting in the media content editing interface the media resources processed using the current effect, wherein the media content editing interface is configured to edit image information and/or audio information of the media resources to obtain the first media content, and the current effect comprises the second effect.

The media resources to be processed may be understood as a media resources processed using an effect (for example, a second effect) to generate the first media content. The media resources may include, for example, content captured by the current user in the capturing interface, and/or media content material selected by the current user in the material uploading interface. The material uploading interface may be an interface for uploading media content materials, such as a local album interface of a current user.

For example, after creating and generating the second effect, the media resources to be processed may be obtained. For example, the capturing interface may be displayed, and the media resource s to be processed is captured based on the capturing operation of the current user in the capturing interface. Alternatively, the material uploading interface is displayed, and the media content material selected by the current user is used as the media resources to be processed based on the material selection operation of the current user in the material uploading interface. After obtaining the media resources to be processed, the media content editing interface of the obtained media resource may be displayed. Therefore, the current user edits the image information and/or audio information of the media resource to obtain the first media content to be posted.

According to the method for generating media content provided in this embodiment, an editing item of a first effect is displayed, wherein the first effect is an effect already posted in a current application, and the editing item is used to edit the first effect. In response to an effect generation operation, a second effect is created and generated based on an editing operation on the first effect. The first media content is generated within the current application based on the second effect. In this embodiment, by using the foregoing technical solution, the user is supported to create an effect based on the editing operation on the posted effect, and generate the media content by using the created effect. In such way, the ways for generating the effect and for generating the media content can be enriched.

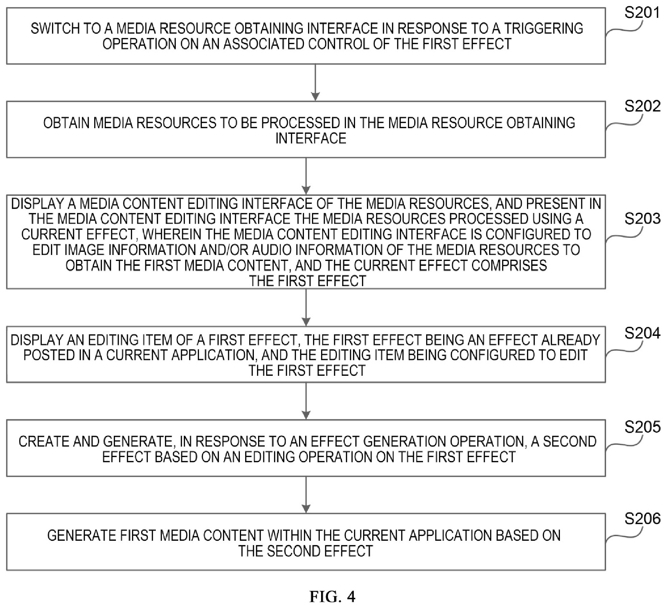

FIG. 4 is a schematic flowchart of another method for generating media content according to an embodiment of the present disclosure. The solution in this embodiment may be combined with one or more optional solutions in the foregoing embodiments. Optionally, before displaying the editing item of the first effect, the method further comprises: switching to a media resource obtaining interface in response to a triggering operation on an associated control of the first effect; obtaining media resources to be processed in the media resource obtaining interface; displaying a media content editing interface of the media resources, and presenting in the media content editing interface the media resources processed using a current effect, wherein the media content editing interface is configured to edit image information and/or audio information of the media resources to obtain the first media content, and the current effect comprises the first effect.

Correspondingly, as shown in FIG. 4, the method for generating media content provided in this embodiment may comprise the following steps.

S201: switching to a media resource obtaining interface in response to a triggering operation on an associated control of the first effect.

The association control of the first effect may be an interface used to instruct to switch to the media resource obtaining interface to obtain the media resource that is processed by using the first effect. The media resource obtaining interface may for example comprise a capturing interface and/or a material uploading interface.

It may be understood that, when the media resource obtaining interface is the capturing interface, the image generated by using the first effect is presented in the capturing interface, or the editing entry of the first effect may be presented in the capturing interface, for example, the display style area and the description area are triggered in the capturing interface. Therefore, the user may implement the modification of the first effect in the capturing interface. In this case, optionally, the media resource obtaining interface comprises a capturing interface of media content, and the method further comprises: presenting, in the capturing interface, an image generated by using the first effect; and/or displaying, in the capturing interface, an editing item of the first effect. The process of modifying the first effect in the capturing interface is similar to the process of triggering the modification of the first effect in the media content editing interface, and details are not repeated herein.

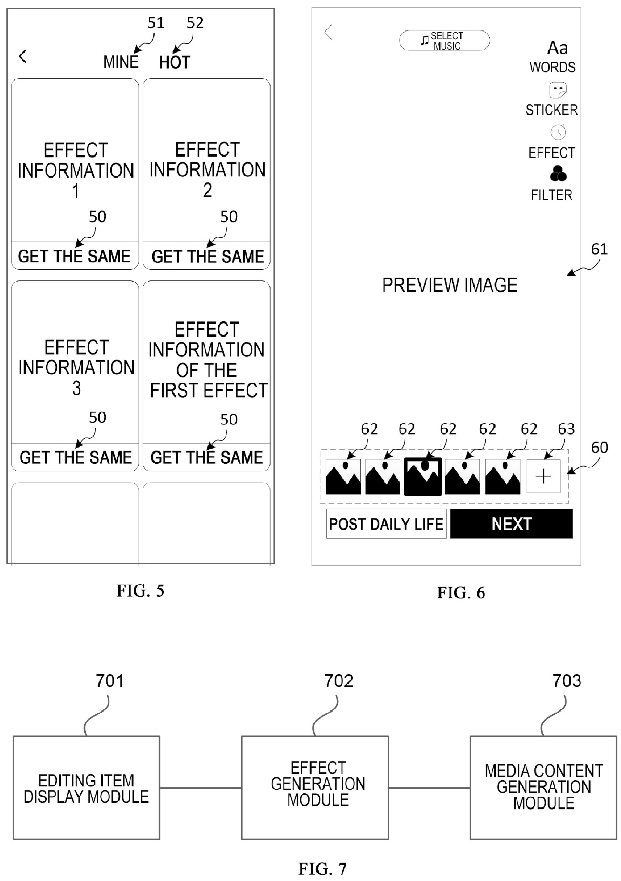

For example, as shown in FIG. 5 (an example in which the association control 50 is displayed in the preset effect presentation interface), the association control 50 of the first effect may be displayed. When it is detected that the current user triggers the association control 50 of the first effect, the media resource obtaining interface may be switched to, thus the media resources to be processed can be obtained.

In this embodiment, the display timing and the display position of the association control of the first effect are not limited. For example, when the media content presented in the media content presentation interface is the media content generated based on the first effect, the association control of the first effect may be further presented in the media content presentation interface; the effect information of the at least one effect including the first effect and the association control of each effect in the at least one effect are displayed in the preset effect presentation interface, as shown in FIG. 5: and/or the association control of the first effect is presented in the detail interface of the first effect.

In this case, optionally, before switching to the media resource obtaining interface in response to the triggering operation on the associated control of the first effect, the method further comprises at least one of: presenting a second media content and the association control of the first effect in a media content presentation interface, the second media content being generated based on the first effect; presenting effect information of at least one effect and the corresponding associated control in a preset effect presentation interface, the at least one effect comprising the first effect; presenting detailed information of the first effect and the associated control of the first effect in a detail interface of the first effect.

In addition, as shown in FIG. 5, the preset effect presentation interface may present a first identifier 51 and a second identifier 52. The first identifier 51 may be used to trigger the presentation of effect information of the effect created by the current user in the preset effect presentation interface. The second identifier 52 may be used to trigger the presentation of the effect information of the recommended effect in the preset effect presentation interface.

S202: obtaining media resources to be processed in the media resource obtaining interface.

The media resources to be processed may be understood as a media resource processed by using the first effect to generate the media content. The media resource may include, for example, content captured by the current user in the capturing interface, and/or media content material selected by the current user in the material uploading interface.

In this embodiment, after the media resource obtaining interface is displayed, the media resources to be processed may be obtained in the media resource obtaining interface. For example, the capturing interface may be displayed, and the media resources to be processed is captured based on the capturing operation of the current user in the capturing interface. Alternatively, the material uploading interface is displayed, and the media content material selected by the current user is used as the media resources to be processed based on the material selection operation of the current user in the material uploading interface.

S203: displaying a media content editing interface of the media resources, and presenting in the media content editing interface the media resources processed using a current effect. The media content editing interface is configured to edit image information and/or audio information of the media resources to obtain the first media content. The current effect comprises the first effect.

In this embodiment, after the media resources to be processed are obtained, the media content editing interface of the obtained media resource may be displayed. The media resources processed by using the first effect are presented in the media content editing interface. For example, a preview image of the media resources processed by using a certain candidate effect of the first effect is presented in the second area of the media content editing interface.

The image information of the media resource may be related information of an image of the media resource, for example, a sticker added in the image, a filter effect added in the image, and/or a size of the image. Optionally, the image information comprises effect adjustment information generated when an image of the media resources is processed by using the current effect, and the effect adjustment information comprises a plurality of candidate effect selection items and/or a control for effect intensity adjustment.

The current effect may be understood as an effect currently used by the user to process the media resource, for example, a first effect or a second effect. The effect adjustment information may be understood as information for adjusting a processing effect of the current effect, for example, a plurality of candidate effect selection items and/or a control for effect intensity adjustment of the current effect. For example, the plurality of candidate effect selection items may be understood as different processing effects to be selected for the current effect, and different candidate effect selection items may correspond to different image processing intensities. Optionally, the plurality of candidate effect selection items is presented in a form of thumbnails of the corresponding preview images. For example, the candidate effect selection item may be presented in the form of a thumbnail of a preview image corresponding to the candidate effect selection item. The control for effect intensity adjustment may be understood as a control for adjusting the effect intensity of the current effect.

The display positions of the plurality of candidate effect selection items of the current effect in the media content editing interface are not limited. Optionally, as shown in FIG. 6, the media content editing interface comprises a first area 60 and a second area 61. The first area 60 is used to present the plurality of candidate effect selection items and/or the control for effect intensity adjustment (not shown in FIG.6). The second area 61 is used to present a preview image corresponding to the target effect. That is, when the media content editing interface is displayed, the plurality of candidate effect selection items 62 and/or the control for effect intensity adjustment of the current effect may be presented in the first area 60 of the media content editing interface, and the preview image corresponding to the target effect may be presented in the second area 61 of the media content editing interface. The target effect may be a candidate effect selection item currently in a selected state or an effect currently indicated by the control for effect intensity adjustment. The preview image corresponding to the target effect may be understood as an image obtained by processing the media resources to be processed using the target effect of the current effect.

It may be understood that the plurality of candidate effects 62 may correspond to different sub-models determined based on the currently determined effect style information and the effect keyword information. The different effect sub-models may be determined by selecting different candidate effects.

The audio information of the media resource may be related information of audio of the media resource, such as the added background music, volume, or information indicating whether to play the original audio of the media resource.

In some implementations, presenting in the media content editing interface the media resources processed using the current effect comprises: determining, in response to an adjustment operation on the effect adjustment information, a target effect obtained by processing the media resources based on the current effect; presenting, in the media content editing interface, the target effect corresponding to the media resources.

The adjustment operation may be a triggering operation for adjusting a processing effect of the current effect, for example, a triggering operation for adjusting a processing intensity of the current effect. The execution manner of the adjustment operation is not limited. Optionally, the adjustment operation on the image information comprises a selection operation on the plurality of candidate effect selection items and/or a triggering operation on the control for effect intensity adjustment. For example, the adjustment operation may be an operation for triggering a candidate effect of the current effect, or an operation for adjusting a processing intensity currently indicated by the control for effect intensity adjustment. The target effect may be understood as the effect of the current effect indicated by the adjustment operation.

For example, when the adjustment operation for the effect adjustment information is received, the target effect obtained by processing the media resource based on the current effect corresponding to the adjustment operation may be determined. The target effect is presented in the media content editing interface, for example, the target effect is presented in the form of the candidate effect using the first effect in the first area of the media content editing interface, and/or the preview image corresponding to the target effect is presented in the second area of the media content editing interface.

S204: displaying an editing item of a first effect, the first effect being an effect already posted in a current application, and the editing item being configured to edit the first effect.

In this embodiment, when the media content editing interface is displayed, the editing item of the current effect (for example, the first effect) may be displayed in the media content editing interface. The editing item of the current effect may be displayed in the effect editing interface of the current effect or in the media content editing interface, based on a first editing item display operation by the current user on the media content editing interface. In this case, optionally, displaying the editing item of the first effect comprises: displaying a first editing item of the first effect in the media content editing interface; and/or displaying, in response to a first editing item display operation on the media content editing interface, a second editing item of the first effect in an effect editing interface of the first effect, or a second editing item of the first effect in the media content editing interface.

The first editing item display operation may be an editing item display operation applied on the media content editing interface. The execution manner of the first editing item display operation is not limited. Optionally, the media content editing interface further presents an editing item display control, and the editing item display control is used to trigger execution of the first editing item display operation. For example, the first editing item display operation may be performed in a manner of triggering an editing item display control presented in the media content editing interface. The presentation position of the editing item display control is not limited. For example, the editing item display control may be presented in the first area or the second area of the media content editing interface.

In response to the first editing item display operation applied on the media content editing interface, the second editing item of the first effect is displayed in the effect editing interface of the first effect, or the second editing item of the first effect is displayed in the media content editing interface. In this case, for example, when the first editing item display operation applied on the media content editing interface is received, for example, when it is detected that the current user triggers the editing item display control 63 displayed in the media content editing interface (as shown in FIG. 6, an example in which the editing item display control is presented in the first area 60 in FIG. 6), the effect editing interface of the first effect may be displayed, and the second editing item of the first effect is displayed in the effect editing interface, as shown in FIG. 2. Alternatively, the editing item of the first effect is presented in the media content editing interface. Thus, the current user may create the second effect by editing the first effect.

S205: creating and generating, in response to an effect generation operation, a second effect based on an editing operation on the first effect.

In this embodiment, when the effect generation operation is received, the second effect may be created and generated based on the editing operation of the current user on the first effect. For example, the second effect is created and generated by processing the first effect based on the first editing item and/or the second editing item. In this case, optionally, creating and generating the second effect based on the editing operation on the first effect comprises: creating and generating the second effect by processing the first effect based on the first editing item and/or processing the first effect based on the second editing item.

S206: generating the first media content within the current application based on the second effect.

In this embodiment, after the second effect is created and generated, the media resource processed using the second effect may be presented in the media content editing interface. In this case, optionally, generating the first media content within the current application based on the second effect comprises: presenting, in the media content editing interface, the media resources processed using the second effect.

According to the method for generating media content provided by the embodiment, the user is supported to edit the posted effect in the media content creation process to create a new effect, and generate the media content based on the created effect. In this way, the ways for generating the media content and for generating the effect can be enriched, and the creation experience of the user is improved.

FIG. 7 is a structural block diagram of an apparatus for generating media content according to an embodiment of the present disclosure. The apparatus may be implemented by software and/or hardware, may be configured in an electronic device, and is typically configured in a mobile phone or a tablet computer, may edit a posted effect by executing a method for generating media content, and generate media content by using an edited effect. As shown in FIG. 7, the apparatus for generating media content provided in this embodiment may comprise: an editing item display module 701, an effect generation module 702 and a media content generation module 703. The editing item display module 701 is configured to display an editing item of a first effect, wherein the first effect is an effect already posted in a current application, and the editing item is configured to edit the first effect. The effect generation module 702 is configured to create and generate, in response to an effect generation operation, a second effect based on an editing operation on the first effect. The media content generation module 703 is configured to generate target media content within the current application based on the second effect.

The apparatus for generating media content provided in this embodiment displays an editing item of a first effect by an editing item display module, wherein the first effect is an effect already posted in a current application, and the editing item is configured to edit the first effect; creates and generates by an effect generation module, in response to an effect generation operation, a second effect based on an editing operation on the first effect; and generates the first media content by a media content generation module within the current application based on the second effect. In this embodiment, by using the foregoing technical solution, the user is supported to create an effect based on the editing operation on the posted effect, and to generate the media content using the created effect. In this way, the ways for generating the effect and for generating the media content can be enriched.

Further, the apparatus for generating media content provided in this embodiment may further comprise: an interface switching module configured to, before displaying the editing item of the first effect, switch to a media resource obtaining interface in response to a triggering operation on an associated control of the first effect; a first resource obtaining module configured to obtain media resources to be processed in the media resource obtaining interface; a first resource presentation module configured to display a media content editing interface of the media resources, and present in the media content editing interface the media resources processed using a current effect, wherein the media content editing interface is configured to edit image information and/or audio information of the media resources to obtain the first media content, and the current effect comprises the first effect.

In the above solution, the editing item display module 701 is configured to: display a first editing item of the first effect in the media content editing interface; and/or display, in response to a first editing item display operation on the media content editing interface, a second editing item of the first effect in an effect editing interface of the first effect, or a second editing item of the first effect in the media content editing interface.

In the above solution, the effect generation module 702 is configured to create and generate the second effect by processing the first effect based on the first editing item and/or processing the first effect based on the second editing item; the media content generation module 703 is configured to present, in the media content editing interface, the media resources processed using the second effect.

Further, the apparatus for generating media content provided in this embodiment may further comprises at least on of: a first control display module configured to, before switching to the media resource obtaining interface in response to the triggering operation on the associated control of the first effect, present a second media content and the association control of the first effect in a media content presentation interface, wherein the second media content is generated based on the first effect; a second control display module configured to, before switching to the media resource obtaining interface in response to the triggering operation on the associated control of the first effect, present effect information of at least one effect and the corresponding associated control in a preset effect presentation interface, wherein the at least one effect comprises the first effect; a third control display module configured to, before switching to the media resource obtaining interface in response to the triggering operation on the associated control of the first effect, present detailed information of the first effect and the associated control of the first effect in a detail interface of the first effect.

In the above solution, the media resource obtaining interface may comprise a capturing interface of media content. The apparatus for generating media content provided in this embodiment may comprises: an image presentation module configured to present, in the capturing interface, an image generated by using the first effect; and/or an editing item display module configured to display, in the capturing interface, an editing item of the first effect.

In the above solution, the editing item display module 701 is configured to: display the editing item of the first effect in an effect editing interface of the first effect in response to a second editing item display operation, the second editing item display operation applied on a preset effect presentation interface or a detail interface of the first effect, and the preset effect presentation interface being configured to present effect information of at least one effect.

Further, the apparatus for generating media content provided in this embodiment may further comprises: a second resource obtaining module configured to, after creating and generating the second effect based on the editing operation on the first effect, obtain media resources to be processed; a second resource presentation module configured to, display a media content editing interface of the media resources, and present in the media content editing interface the media resources processed using the current effect, wherein the media content editing interface is configured to edit image information and/or audio information of the media resources to obtain the first media content, and the current effect comprises the second effect.

In the above solution, the image information comprises effect adjustment information generated when an image of the media resources is processed by using the current effect, and the effect adjustment information may comprise a plurality of candidate effect selection items and/or a control for effect intensity adjustment.

In the above solution, the first resource presentation module and/or the second resource presentation module may be configured to: determine, in response to an adjustment operation on the effect adjustment information, a target effect obtained by processing the media resources based on the current effect; present, in the media content editing interface, the target effect corresponding to the media resources.

In the above solution, the adjustment operation on the image information may comprise a selection operation on the plurality of candidate effect selection items and/or a triggering operation on the control for effect intensity adjustment.

In the above solution, the media content editing interface comprises a first area for presenting the plurality of candidate effect selection items and/or the control for effect intensity adjustment, and a second area for presenting a preview image corresponding to the target effect.

In the above solution, the plurality of candidate effect selection items may be presented in a form of thumbnails of the corresponding preview images.

Further, the apparatus for generating media content provided in this embodiment may further comprises: an effect switching module configured to, after presenting in the media content editing interface the media resources processed using the current effect, switch the target effect in response to an effect switching operation on the media content editing interface, and switch the preview image presented in the second area based on a target effect being switched to.

In the above solution, the effect information comprises at least one of: poster information, effect name, effect keyword information, or effect usage information.

In the above solution, the editing item comprises a first editing item and/or a second editing item, the first editing item comprises a candidate effect selection item and/or an effect intensity editing item, and the effect intensity editing item is configured to edit an effect intensity of the first effect; the second editing item comprises a style editing item and/or a keyword editing item, the style editing item is configured to edit the effect style information of the first effect, and the keyword editing item is configured to edit the effect keyword information of the first effect.

In the above solution, the editing item may comprise a second editing item, and the editing item display module 701 is configured to perform least one of: display an effect style editing item, the effect style editing item comprising at least one effect style information, the at least one effect style information comprising first effect style information of the first effect, and the first effect style information being displayed as in a selected state; display an effect keyword editing item, the effect keyword editing item comprising at least one effect keyword information, the at least one effect keyword information comprising first effect keyword information of the first effect, and the first effect keyword information being displayed as in a selected state.

Further, the apparatus for generating media content provided in this embodiment may further comprise: an effect editing module configured to, after displaying the editing item of the first effect, edit the first effect in response to an editing operation on the first effect, the editing operation applied on the editing item.

In the above solution, the effect editing module may comprise at least one of: a first selection unit configured to switch, in response to a selection operation on second effect style information in the at least one effect style information, the second effect style information from an unselected state to a selected state, and the first effect style information from a selected state to an unselected state; a second selection unit configured to switch, in response to a selection operation on second effect keyword information in the at least one effect keyword information, the second effect keyword from an unselected state to a selected state; a deselection unit configured to switch, in response to a deselection operation on the first effect keyword, a first effect keyword corresponding to the deselection operation from a selected state to an unselected state; an update unit configured to update, in response to a modification operation on third effect keyword information in the at least one effect keyword information, the third effect keyword information, and display the third effect keyword information as in a selected state; a deletion unit configured to cancel, in response to a deletion operation on fourth effect keyword information in the at least one effect keyword information, a display of the fourth effect keyword information.

In the above solution, the editing item comprises a second editing item, the second editing item comprises a keyword editing item, and the effect editing module may comprise: a keyword addition unit configured to display, in response to an effect keyword information addition operation, an effect keyword input area for a current user to input fifth effect keyword information; additionally present, in response to an input completion operation, the fifth effect keyword information inputted by the current user; or obtain, in response to the effect keyword input operation, the fifth effect keyword information, and additionally present the fifth effect keyword information.

In the above solution, the keyword addition unit may be configured to: additionally present the fifth effect keyword information in a selected state.

Further, the apparatus for generating media content provided in this embodiment may further comprises: a content obtaining module configured to, before additionally presenting the fifth effect keyword information, obtain effect description content inputted by the current user; a tokenization module configured to perform tokenization on the effect description content to obtain at least one keyword information as the fifth effect keyword information.

In the above solution, the tokenization module may be configured to: perform tokenization on the effect description content based on semantic analysis; and/or perform tokenization on the effect description content based on a preset separator.

Further, the apparatus for generating media content provided in this embodiment may further comprises: a first posting module configured to, after creating and generating the second effect based on the editing operation on the first effect, post the second effect in the current application in response to a first posting operation for the second effect; a second posting module configured to, after creating and generating the second effect based on the editing operation on the first effect, post the first media content and the second effect in the current application in response to a second posting operation for the first media content.

The apparatus for generating media content provided by the embodiments of the present disclosure may perform the method for generating media content provided by any embodiment of the present disclosure, and has functional modules and beneficial effects corresponding to the method for generating media content. For technical details not described in detail in this embodiment, reference may be made to the method for generating media content provided by any embodiment of the present disclosure.

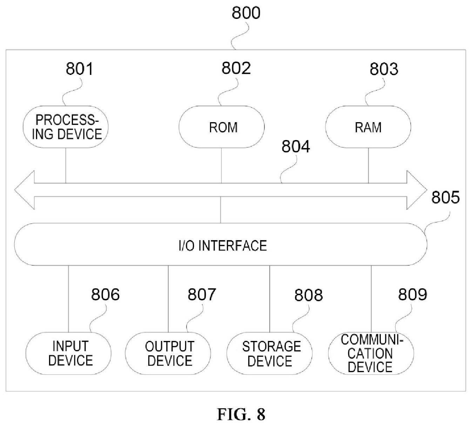

Reference is made to FIG. 8, which is a schematic structural diagram of an electronic device (for example, a terminal device) 800 suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an on-board terminal (for example, an on-board navigation terminal), and a fixed terminal such as a digital TV, a desktop computer, and the like. The electronic device shown in FIG. 8 is merely an example, and should not impose any limitation on the functions and scope of use of the embodiments of the present disclosure.

As shown in FIG. 8, the electronic device 800 may comprise a processing device (for example, a central processor, a graphics processor, etc.) 801, which may perform various appropriate actions and processes according to a program stored in a read-only memory (ROM) 802 or a programs loaded into a random access memory (RAM) 803 from a storage device 808. In the RAM 803, various programs and data required by the operation of the electronic device 800 are also stored. The processing device 801, the ROM 802, and the RAM 803 are connected to each other through a bus 804. Input/output (I/O) interface 805 is also connected to bus 804.

Generally, the following devices may be connected to the I/O interface 805: an input device 806 including, for example, a touch screen, a touchpad, a keyboard, a mouse, a camera, a microphone, an accelerometer, a gyroscope, etc. ; an output device 807 including, for example, a liquid crystal display (LCD), a speaker, a vibrator, etc. ; a storage device 808 including, for example, a magnetic tape, a hard disk, etc. ; and a communication device 809. The communication device 809 may allow the electronic device 800 to communicate wirelessly or wired with other devices to exchange data. While FIG. 8 shows an electronic device 800 with various devices, it should be understood that it is not required to implement or have all illustrated devices. Alternatively, more or fewer devices may be implemented or provided.

In particular, according to an embodiment of the present disclosure, the process described above with reference to the flowchart may be implemented as a computer software program. For example, the embodiments of the present disclosure comprise a computer program product comprising a computer program embodied on a non-transitory computer readable medium, the computer program comprising program code for performing the method shown in the flowchart. In such embodiments, the computer program may be downloaded and installed from the network through the communication device 809, or installed from the storage device 808, or installed from the ROM 802. The computer program, when executed by the processing device 801, performs the foregoing functions defined in the method of the embodiments of the present disclosure.

It should be noted that the computer-readable medium described above may be a computer readable signal medium, a computer readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of computer-readable storage medium may include, but not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus or device. The program code embodied on the computer-readable medium may be transmitted with any suitable medium, including, but not limited to, wires, optical cables, RF (radio frequency), and the like, or any suitable combination thereof.

In some implementations, the client and server may communicate using any currently known or future developed network protocol, such as HTTP (HyperText Transfer Protocol), and may be interconnected with any form or medium of digital data communication (e.g., a communication network). Examples of communication networks include local area networks ("LANs"), wide area networks ("WANs"), inter-networks (e.g., the Internet), and end-to-end networks (e.g., ad hoc end-to-end networks), as well as any currently known or future developed networks.

The above computer-readable medium may be included in the electronic device; or may be separately present without being assembled into the electronic device.

**The** computer readable medium carries one or more programs which, when executed by the electronic device, cause the electronic device: display an editing item of a first effect, the first effect being an effect already posted in a current application, and the editing item being configured to edit the first effect; create and generate, in response to an effect generation operation, a second effect based on an editing operation on the first effect; generating first media content within the current application based on the second effect.

Computer program code for performing the operations of the present disclosure may be written in one or more programming languages or a combination thereof, which include, but not limited to, object oriented programming languages such as Java, Smalltalk, C++, and conventional procedural programming languages, such as the "C" language or similar programming languages. The program code may execute entirely on a user's computer, partially on a user's computer, as a stand-alone software package, partially on a user's computer and partially on a remote computer, or entirely on a remote computer or server. In the case of a remote computer, the remote computer may be connected to the user's computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software or hardware. The name of a module does not constitute a limitation on the unit itself in some cases.

The functions described above may be performed, at least in part, by one or more hardware logic components. For example, without limitation, example types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses or devices, or any suitable combination of the foregoing. More specific examples of machine-readable storage media may include electrical connections based on one or more wires, portable computer disks, hard disks, random access memory (RAM), read-only memory

(ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments of this disclosure, the example 1 provides a method for generating media content, comprising: displaying an editing item of a first effect, the first effect being an effect already posted in a current application, and the editing item being configured to edit the first effect; creating and generating, in response to an effect generation operation, a second effect based on an editing operation on the first effect; generating first media content within the current application based on the second effect.

According to one or more embodiments of this disclosure, before displaying the editing item of the first effect, the method of example 2 according to example 1 further comprises: switching to a media resource obtaining interface in response to a triggering operation on an associated control of the first effect; obtaining media resources to be processed in the media resource obtaining interface; displaying a media content editing interface of the media resources, and presenting in the media content editing interface the media resources processed using a current effect, wherein the media content editing interface is configured to edit image information and/or audio information of the media resources to obtain the first media content, and the current effect comprises the first effect.

According to one or more embodiments of this disclosure, the method of example 3 according to example 2, displaying the editing item of the first effect comprises: displaying a first editing item of the first effect in the media content editing interface; and/or displaying, in response to a first editing item display operation on the media content editing interface, a second editing item of the first effect in an effect editing interface of the first effect, or a second editing item of the first effect in the media content editing interface.

According to one or more embodiments of this disclosure, the method of example 4 according to example 3, creating and generating the second effect based on the editing operation on the first effect comprises: creating and generating the second effect by processing the first effect based on the first editing item and/or processing the first effect based on the second editing item; generating the first media content within the current application based on the second effect comprises: presenting, in the media content editing interface, the media resources processed using the second effect.

According to one or more embodiments of this disclosure, before switching to the media resource obtaining interface in response to the triggering operation on the associated control of the first effect, the method of example 5 according to example 2 further comprises at least one of: presenting a second media content and the association control of the first effect in a media content presentation interface, the second media content being generated based on the first effect; presenting effect information of at least one effect and the corresponding associated control in a preset effect presentation interface, the at least one effect comprising the first effect; presenting detailed information of the first effect and the associated control of the first effect in a detail interface of the first effect.

According to one or more embodiments of this disclosure, the method of example 6 according to example 5, the media resource obtaining interface comprises a capturing interface of media content, and the method further comprises: presenting, in the capturing interface, an image generated by using the first effect; and/or displaying, in the capturing interface, an editing item of the first effect.

According to one or more embodiments of this disclosure, the method of example 7 according to example 1, displaying the editing item of the first effect comprises: displaying the editing item of the first effect in an effect editing interface of the first effect in response to a second editing item display operation, the second editing item display operation applied on a preset effect presentation interface or a detail interface of the first effect, and the preset effect presentation interface being configured to present effect information of at least one effect.

According to one or more embodiments of this disclosure, after creating and generating the second effect based on the editing operation on the first effect, the method of example 8 according to example 7 further comprises: obtaining media resources to be processed; displaying a media content editing interface of the media resources, and presenting in the media content editing interface the media resources processed using the current effect, wherein the media content editing interface is configured to edit image information and/or audio information of the media resources to obtain the first media content, and the current effect comprises the second effect.

According to one or more embodiments of this disclosure, the method of example 9 according to any of examples 2-6 and example 8, the image information comprises effect adjustment information generated when an image of the media resources is processed by using the current effect, and the effect adjustment information comprises a plurality of candidate effect selection items and/or a control for effect intensity adjustment.

According to one or more embodiments of this disclosure, the method of example 10 according to example 9, presenting in the media content editing interface the media resources processed using the current effect comprises: determining, in response to an adjustment operation on the effect adjustment information, a target effect obtained by processing the media resources based on the current effect; presenting, in the media content editing interface, the target effect corresponding to the media resources.

According to one or more embodiments of this disclosure, the method of example 11 according to example 10, the adjustment operation on the image information comprises a selection operation on the plurality of candidate effect selection items and/or a triggering operation on the control for effect intensity adjustment.

According to one or more embodiments of this disclosure, the method of example 12 according to example 10, the media content editing interface comprises a first area for presenting the plurality of candidate effect selection items and/or the control for effect intensity adjustment, and a second area for presenting a preview image corresponding to the target effect.

According to one or more embodiments of this disclosure, the method of example 13 according to example 12, the plurality of candidate effect selection items is presented in a form of thumbnails of the corresponding preview images.

According to one or more embodiments of this disclosure, after presenting in the media content editing interface the media resources processed using the current effect, the method of example 14 according to example 12 further comprises: switching the target effect in response to an effect switching operation on the media content editing interface, and switching the preview image presented in the second area based on a target effect being switched to.

According to one or more embodiments of this disclosure, the method of example 15 according to any of examples 5-7, the effect information comprises at least one of: poster information, effect name, effect keyword information, or effect usage information.

According to one or more embodiments of this disclosure, the method of example 16 according to any of examples 1-8, the editing item comprises a first editing item and/or a second editing item, the first editing item comprises a candidate effect selection item and/or an effect intensity editing item, and the effect intensity editing item is configured to edit an effect intensity of the first effect; the second editing item comprises a style editing item and/or a keyword editing item, the style editing item is configured to edit the effect style information of the first effect, and the keyword editing item is configured to edit the effect keyword information of the first effect.

According to one or more embodiments of this disclosure, the method of example 17 according to example 16, the editing item comprises a second editing item, and displaying the editing item of the first effect comprises at least one of: displaying an effect style editing item, the effect style editing item comprising at least one effect style information, the at least one effect style information comprising first effect style information of the first effect, and the first effect style information being displayed as in a selected state; displaying an effect keyword editing item, the effect keyword editing item comprising at least one effect keyword information, the at least one effect keyword information comprising first effect keyword information of the first effect, and the first effect keyword information being displayed as in a selected state.

According to one or more embodiments of this disclosure, after displaying the editing item of the first effect, the method of example 18 according to example 17 further comprises: editing the first effect in response to an editing operation on the first effect, the editing operation applied on the editing item.

According to one or more embodiments of this disclosure, the method of example 19 according to example 18, editing the first effect in response to the editing operation on the first effect comprises at least one of: switching, in response to a selection operation on second effect style information in the at least one effect style information, the second effect style information from an unselected state to a selected state, and the first effect style information from a selected state to an unselected state; switching, in response to a selection operation on second effect keyword information in the at least one effect keyword information, the second effect keyword from an unselected state to a selected state; switching, in response to a deselection operation on the first effect keyword, a first effect keyword corresponding to the deselection operation from a selected state to an unselected state; updating, in response to a modification operation on third effect keyword information in the at least one effect keyword information, the third effect keyword information, and displaying the third effect keyword information as in a selected state; cancelling, in response to a deletion operation on fourth effect keyword information in the at least one effect keyword information, a display of the fourth effect keyword information.

According to one or more embodiments of this disclosure, the method of example 20 according to example 18, the editing item comprises a second editing item, the second editing item comprises a keyword editing item, and editing the first effect in response to the editing operation on the first effect comprises: displaying, in response to an effect keyword information addition operation, an effect keyword input area for a current user to input fifth effect keyword information; additionally presenting, in response to an input completion operation, the fifth effect keyword information inputted by the current user; or obtaining, in response to the effect keyword input operation, the fifth effect keyword information, and additionally presenting the fifth effect keyword information.

According to one or more embodiments of this disclosure, the method of example 21 according to example 20, additionally presenting the fifth effect keyword information comprises: additionally presenting the fifth effect keyword information in a selected state.

According to one or more embodiments of this disclosure, before additionally presenting the fifth effect keyword information, the method of example 22 according to example 20 further comprises: obtaining effect description content inputted by the current user; performing tokenization on the effect description content to obtain at least one keyword information as the fifth effect keyword information.

According to one or more embodiments of this disclosure, the method of example 23 according to example 22, performing tokenization on the effect description content comprises: performing tokenization on the effect description content based on semantic analysis; and/or performing tokenization on the effect description content based on a preset separator.

According to one or more embodiments of this disclosure, after creating and generating the second effect based on the editing operation on the first effect, the method of example 24 according to any of examples 1-8 further comprises at least one of: posting the second effect in the current application in response to a first posting operation for the second effect; posting the first media content and the second effect in the current application in response to a second posting operation for the first media content.

According to one or more embodiments of this disclosure, the example 25 provides an apparatus for generating media content, comprising: an editing item display module configured to display an editing item of a first effect, the first effect being an effect already posted in a current application, and the editing item being configured to edit the first effect; an effect generation module configured to create and generate, in response to an effect generation operation, a second effect based on an editing operation on the first effect; a media content generation module configured to generate target media content within the current application based on the second effect.

According to one or more embodiments of this disclosure, the example 26 provides an electronic device, comprising: one or more processor; and a memory storing one or more programs which, when executed by the one or more processor, cause the one or more processor to perform the method for generating media content according to any of claims 1-24.

According to one or more embodiments of this disclosure, the example 27 provides a computer-readable storage medium storing computer instructions that, when executed by a processor, implement the method for generating media content according to any of claims 1-24.

The above description is merely an illustration of the preferred embodiments of the present disclosure and the principles of the technology used herein. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, it should not be understood to require that these operations be performed in the particular order shown or in sequential order. In certain circumstances, multitasking and parallel processing may be advantageous. Likewise, although several specific implementation details are included in the discussion above, these should not be construed as limiting the scope of the present disclosure. Some features described in the context of separate embodiments may also be implemented in combination in a single embodiment. Conversely, the various features described in the context of a single embodiment may also be implemented in multiple embodiments either individually or in any suitable subcombinations.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for generating media content, comprising:
displaying an editing item of a first effect, the first effect being an effect already posted in a current application, and the editing item being configured to edit the first effect;
creating and generating, in response to an effect generation operation, a second effect based on an editing operation on the first effect;
generating first media content within the current application based on the second effect.

2. The method according to claim 1, wherein before displaying the editing item of the first effect, the method further comprises:
switching to a media resource obtaining interface in response to a triggering operation on an associated control of the first effect;
obtaining media resources to be processed in the media resource obtaining interface;
displaying a media content editing interface of the media resources, and presenting in the media content editing interface the media resources processed using a current effect, wherein the media content editing interface is configured to edit image information and/or audio information of the media resources to obtain the first media content, and the current effect comprises the first effect.

3. The method according to claim 2, wherein displaying the editing item of the first effect comprises:
displaying a first editing item of the first effect in the media content editing interface; and/or
displaying, in response to a first editing item display operation on the media content editing interface, a second editing item of the first effect in an effect editing interface of the first effect, or a second editing item of the first effect in the media content editing interface.

4. The method according to claim 3, wherein creating and generating the second effect based on the editing operation on the first effect comprises:
creating and generating the second effect by processing the first effect based on the first editing item and/or processing the first effect based on the second editing item;
generating the first media content within the current application based on the second effect comprises:
presenting, in the media content editing interface, the media resources processed using the second effect.

5. The method according to claim 2, wherein before switching to the media resource obtaining interface in response to the triggering operation on the associated control of the first effect, the method further comprises at least one of:
presenting a second media content and the association control of the first effect in a media content presentation interface, the second media content being generated based on the first effect;
presenting effect information of at least one effect and the corresponding associated control in a preset effect presentation interface, the at least one effect comprising the first effect;
presenting detailed information of the first effect and the associated control of the first effect in a detail interface of the first effect.

6. The method according to claim 5, wherein the media resource obtaining interface comprises a capturing interface of media content, and the method further comprises:
presenting, in the capturing interface, an image generated by using the first effect; and/or
displaying, in the capturing interface, an editing item of the first effect.

7. The method according to claim 1, wherein displaying the editing item of the first effect comprises:
displaying the editing item of the first effect in an effect editing interface of the first effect in response to a second editing item display operation, the second editing item display operation applied on a preset effect presentation interface or a detail interface of the first effect, and the preset effect presentation interface being configured to present effect information of at least one effect.

8. The method according to claim 7, wherein after creating and generating the second effect based on the editing operation on the first effect, the method further comprises:
obtaining media resources to be processed;
displaying a media content editing interface of the media resources, and presenting in the media content editing interface the media resources processed using the current effect, wherein the media content editing interface is configured to edit image information and/or audio information of the media resources to obtain the first media content, and the current effect comprises the second effect.

9. The method according to any of claims 2-6 and claim 8, wherein the image information comprises effect adjustment information generated when an image of the media resources is processed by using the current effect, and the effect adjustment information comprises a plurality of candidate effect selection items and/or a control for effect intensity adjustment.

10. The method according to claim 9, wherein presenting in the media content editing interface the media resources processed using the current effect comprises:
determining, in response to an adjustment operation on the effect adjustment information, a target effect obtained by processing the media resources based on the current effect;
presenting, in the media content editing interface, the target effect corresponding to the media resources.

11. The method according to claim 10, wherein the adjustment operation on the image information comprises a selection operation on the plurality of candidate effect selection items and/or a triggering operation on the control for effect intensity adjustment.

12. The method according to claim 10, wherein the media content editing interface comprises a first area for presenting the plurality of candidate effect selection items and/or the control for effect intensity adjustment, and a second area for presenting a preview image corresponding to the target effect.

13. The method according to claim 12, wherein the plurality of candidate effect selection items is presented in a form of thumbnails of the corresponding preview images.

14. The method according to claim 12, wherein after presenting in the media content editing interface the media resources processed using the current effect, the method further comprises:
switching the target effect in response to an effect switching operation on the media content editing interface, and switching the preview image presented in the second area based on a target effect being switched to.

15. The method according to any of claims 5-7, wherein the effect information comprises at least one of: poster information, effect name, effect keyword information, or effect usage information.

16. The method according to any of claims 1-8, wherein the editing item comprises a first editing item and/or a second editing item, the first editing item comprises a candidate effect selection item and/or an effect intensity editing item, and the effect intensity editing item is configured to edit an effect intensity of the first effect; the second editing item comprises a style editing item and/or a keyword editing item, the style editing item is configured to edit the effect style information of the first effect, and the keyword editing item is configured to edit the effect keyword information of the first effect.

17. The method according to claim 16, wherein the editing item comprises a second editing item, and displaying the editing item of the first effect comprises at least one of:
displaying an effect style editing item, the effect style editing item comprising at least one effect style information, the at least one effect style information comprising first effect style information of the first effect, and the first effect style information being displayed as in a selected state;
displaying an effect keyword editing item, the effect keyword editing item comprising at least one effect keyword information, the at least one effect keyword information comprising first effect keyword information of the first effect, and the first effect keyword information being displayed as in a selected state.

18. The method according to claim 17, wherein after displaying the editing item of the first effect, the method further comprises:
editing the first effect in response to an editing operation on the first effect, the editing operation applied on the editing item.

19. The method according to claim 18, wherein editing the first effect in response to the editing operation on the first effect comprises at least one of:
switching, in response to a selection operation on second effect style information in the at least one effect style information, the second effect style information from an unselected state to a selected state, and the first effect style information from a selected state to an unselected state;
switching, in response to a selection operation on second effect keyword information in the at least one effect keyword information, the second effect keyword from an unselected state to a selected state;
switching, in response to a deselection operation on the first effect keyword, a first effect keyword corresponding to the deselection operation from a selected state to an unselected state;
updating, in response to a modification operation on third effect keyword information in the at least one effect keyword information, the third effect keyword information, and displaying the third effect keyword information as in a selected state;
cancelling, in response to a deletion operation on fourth effect keyword information in the at least one effect keyword information, a display of the fourth effect keyword information.

20. The method according to claim 18, wherein the editing item comprises a second editing item, the second editing item comprises a keyword editing item, and editing the first effect in response to the editing operation on the first effect comprises:
displaying, in response to an effect keyword information addition operation, an effect keyword input area for a current user to input fifth effect keyword information;
additionally presenting, in response to an input completion operation, the fifth effect keyword information inputted by the current user; or
obtaining, in response to the effect keyword input operation, the fifth effect keyword information, and additionally presenting the fifth effect keyword information.

21. The method according to claim 20, wherein additionally presenting the fifth effect keyword information comprises:
additionally presenting the fifth effect keyword information in a selected state.

22. The method according to claim 20, wherein before additionally presenting the fifth effect keyword information, the method further comprises:
obtaining effect description content inputted by the current user;
performing tokenization on the effect description content to obtain at least one keyword information as the fifth effect keyword information.

23. The method according to claim 22, wherein performing tokenization on the effect description content comprises:
performing tokenization on the effect description content based on semantic analysis; and/or
performing tokenization on the effect description content based on a preset separator.

24. The method according to any of claims 1-8, wherein after creating and generating the second effect based on the editing operation on the first effect, the method further comprises at least one of:
posting the second effect in the current application in response to a first posting operation for the second effect;
posting the first media content and the second effect in the current application in response to a second posting operation for the first media content.

25. An apparatus for generating media content, comprising:
an editing item display module configured to display an editing item of a first effect, the first effect being an effect already posted in a current application, and the editing item being configured to edit the first effect;
an effect generation module configured to create and generate, in response to an effect generation operation, a second effect based on an editing operation on the first effect;
a media content generation module configured to generate target media content within the current application based on the second effect.

26. An electronic device, comprising:
at least one processor; and
a memory communicatively connected to the at least one processor; wherein,
the memory stores a computer program executable by the at least one processor, and the computer program is executed by the at least one processor to enable the at least one processor to perform the method for generating media content according to any of claims 1-24.

27. A computer-readable storage medium storing computer instructions, the computer instructions being configured to cause a processor to implement the method for generating media content according to any of claims 1-24.
